Europäisches Patentamt

European Patent Office

Office européen des brevets

(11) Veröffentlichungsnummer: **0 138 742**
A2

(12) # EUROPÄISCHE PATENTANMELDUNG

(21) Anmeldenummer: 84730043.1

(51) Int. Cl.⁴: **B 29 C 63/06**

(22) Anmeldetag: 16.04.84

(30) Priorität: 11.07.83 DE 3325346

(71) Anmelder: MANNESMANN Aktiengesellschaft, Mannesmannufer 2, D-4000 Düsseldorf 1 (DE)

(43) Veröffentlichungstag der Anmeldung: 24.04.85 Patentblatt 85/17

(72) Erfinder: Landgraf, Helmut, Dipl.-Phys., Aubruchgraben 90, D-4100 Duisburg 46 (DE)

(74) Vertreter: Meissner, Peter E., Dipl.-Ing. et al, Herbertstrasse 22, D-1000 Berlin 33 (DE)

(84) Benannte Vertragsstaaten: AT BE CH FR GB LI NL

(54) Verfahren und Vorrichtung zum Erzeugen einer mechanischen Schutzschicht für Stahlrohre.

(57) Die Erfindung betrifft ein Verfahren und eine Vorrichtung zum Erzeugen einer mechanischen Schutzschicht auf der Oberfläche eines mit einer passiven Korrosionsschutzschicht, z.B. einer thermoplastischen Kunststoffmantelschicht versehenen Stahlrohres.

Um eine Ummantelung mit der Schutzschicht bei höherer Produktionsgeschwindigkeit zu ermöglichen, ohne dass sich Probleme hinsichtlich der Lagerung der beschichteten Rohre vor der Aushärtung des aufgebrachten Gemisches ergeben, wird vorgeschlagen, dass auf das härtbare Material aufnehmenden Trägerfolie ein körniges Material, dessen Grösstkorn der gewünschten Schichtdicke entspricht, aufgebracht wird und dass Rohr auf der ausgebreiteten Trägerfolie zwecks Ummantelung abgewälzt wird.

Die Erfindung betrifft ein Verfahren und eine Vorrichtung zum Erzeugen einer mechanischen Schutzschicht auf der Oberfläche eines bereits mit einer passiven Korrosionsschutzschicht versehenen Stahlrohres gemäß dem Oberbegriff des Patentanspruches 1. Eine Korrosionsschutzschicht kann beispielsweise in Form eines thermoplastischen Doppelschlauches, der aus einer inneren Kleberschicht aus Äthylen-Copolymerisat und einer darüber liegenden Polyäthylenschicht besteht, nach einem aus der DE-OS 19 57 078 bekannten Verfahren auf ein erwärmtes Stahlrohr aufgebracht werden. Es ist seit vielen Jahren bekannt, eine solche Korrosionsschutzschicht durch eine darüber gelegte äußere Mantelschicht vor mechanischen Beschädigungen beim Transport von Rohrleitungsstücken und insbesondere bei der Verlegung von Rohrleitungen zu schützen. Eine solche Schutzschicht kann beispielsweise aus einer im Vergleich zur Korrosionsschutzschicht aus weniger wertvollem Polyäthylen bestehenden, mehrere Millimeter dicken Polyäthylenschicht bestehen (Firmenbroschüre: Mannesmann-Stahlrohre mit Kunststoffummantelung, 1964) . Auch die Verwendung von Bitumen oder Wollfilzpappe für diesen Zweck ist seit Jahren bekannt. Ferner sind mechanische Schutzschichten aus einem plastischen zementhaltigen Mörtel bekannt; ein hierfür geeignetes Auftragungsverfahren ist unter dem Aktenzeichen DE 32 06 582 vorgeschlagen worden. Bei diesem Verfahren werden Stahlrohre, die nach Erwärmung mit einer Mantelfolie aus Polyäthylen nach dem Wickelverfahren beschichtet worden sind und anschließend in einer Kühlstrecke abgekühlt wurden, nach Verlassen der Kühlstrecke mit einem porösen oder weitmaschigen Bandageband, welches mit einem plastischen zementhaltigen Mörtel getränkt oder beschichtet ist, umwickelt, wobei der Kunststoffmantel durch Regeln der Kühlung in der Kühlstrecke auf eine Temperatur gebracht wurde, welche der Zusammensetzung des Zementmörtels angepaßt ist und dessen Aushärtung beschleunigt. Das Umwickeln des Stahlrohres mit dem Bandageband für den mechanischen Schutz erfolgt ebenso wie das Aufbringen des Folienbandes für den Korrosionsschutz schraubenlinienförmig. Dieses Verfahren eignet sich in besonderer Weise für die Ummantelung von Rohren mit größerem Durchmesser. Für Rohre kleineren Durchmessers ist es dagegen aus wirtschaftlicher Sicht wegen der erforderlichen hohen Produktionsleistung weniger geeignet.

Ferner ist aus der DE-OS 31 22 347 ein Verfahren zum Auftragen einer mechanischen Schutzbeschichtung durch Aufschleudern eines Gemisches aus einem zementartigen Material, polymeren Feststoffen und zerhackten Fasern oder Flocken mittels rotierender Bürsten auf ein mit einem Korrosionsschutz beschichtetes Rohr bekannt.

Gemeinsam haftet diesen Verfahren das Problem an, daß bei zementhaltigen Bindemitteln die Aushärtung sehr langsam erfolgt und dadurch eine längere Aushärtelagerung außerhalb der Beschichtungslinie erforderlich wird, bei der die Rohre von der Innenseite her oder an den ungeschützten Rohrenden gestützt werden müssen, damit ein Eindrücken der Schutzschicht an den Auflagestellen des Rohres vermieden wird. Bei Einsatz reaktiver Harze als Bindemittel in hochgefüllten Massen, die durch übliche Zweikomponentenspritzeinrichtungen nicht mehr verarbeitet werden können, darf die Aushärtezeit nicht zu kurz eingestellt werden, da sonst im Falle von Produktionsstörungen durch "Einfrieren" der Beschichtungsmasse große Schäden entstehen können. Umgekehrt sind längere Aushärtezeiten hinderlich hinsichtlich der Realisierung möglichst hoher Produktionsgeschwindigkeiten.

Aufgabe der Erfindung ist es daher, ein Verfahren anzugeben, das die Ummantelung von Stahlrohren mit einer mechanischen Schutzschicht bei hoher Produktionsgeschwindigkeit zuläßt und keine Probleme hinsichtlich der Lagerung der beschichteten Rohre vor der Aushärtung des Gemisches mit sich bringt, das in den Fertigungsfluß einer herkömmlichen Beschichtungsanlage für das Auftragen eines Korrosionsschutzes integrierbar ist und nur einen geringen apparativen Aufwand für seine Durchführung erfordert.

Gelöst wird diese Aufgabe durch ein Verfahren mit den im Patentanspruch 1 gekennzeichneten Merkmalen. Eine Vorrichtung zur Durchführung des erfindungsgemäßen Verfahrens ist im Anspruch 23 gekennzeichnet. Weiterbildungen der Erfindung sind in den jeweiligen Unteransprüchen angegeben.

0138742

Der Erfindung liegt der Gedanke zugrunde, ein aushärtbares Gemisch, das im ausgehärteten Zustand die mechanische Schutzschicht bildet, auf einer Trägerfolie abzulegen und durch einfaches Abwälzen des zu beschichtenden Stahlrohres auf die Rohroberfläche zu applizieren. Die Trägerfolie, die die gesamte zu beschichtende Rohrlänge überdeckt, wird dabei zu Beginn des Abwälzvorganges mit einer Längsseite an die Korrosionsschutzschicht des Rohres und zum Schluß des Abwälzvorganges mit der zweiten Längsseite in einem Überlappungsbereich an die Rückseite der Trägerfolie angeklebt. Die Trägerfolie hat die Aufgabe, die noch weiche mechanische Schutzschicht nach außen hin zusammenzuhalten. Erfindungswesentlich ist es, daß in das Gemisch ein körniges Material eingebracht wird, dessen Größtkorn der gewünschten Schichtdicke der mechanischen Schutzschicht entspricht und einen Volumenanteil von mindestens 10 % des Gemisches ausmacht. Dieses Größtkorn erfüllt zwei Funktionen. Zum einen bewirkt es, daß beim Abwälzen des korrosionsbeschichteten Rohres der Abstand der Korrosionsschutzschicht-Oberfläche im unteren Scheitelpunkt des Rohrquerschnittes von der Auflagefläche der gewünschten Dicke der mechanischen Schutzschicht entspricht, zum anderen verhindert es durch seine Stützwirkung ein Eindrücken der noch nicht ausgehärteten mechanischen Schutzschicht. Auf diese Weise wird es also ermöglicht, eine hohe Produktionsleistung zuzulassen, ohne gleichzeitig die Aushärtezeit des Gemisches entsprechend herabsetzen zu müssen.

Das aushärtbare Gemisch muß vor dem Abwälzen des Stahlrohres noch nicht gleichmäßig auf der Trägerfolie verteilt sein. Es genügt, wenn das aushärtbare Gemisch entlang der Seite der Trägerfolie als Strang abgelegt ist, die an die Korrosionsschutzschicht des Stahlrohres angeklebt wird. Durch das Abwälzen des Stahlrohres wird das aushärtbare Gemisch über den Umfang nach Maßgabe des Größtkornes verteilt. Dabei kann es zweckmäßig sein, zur schnelleren Auswalzung des Gemisches den ansonsten durch das Eigengewicht des Rohres bestimmten Auswalzdruck zusätzlich durch entsprechende Kraftaufbringung von außen zu verstärken.

Weiterhin ist es vorteilhaft, zur Beschleunigung der Aushärtung des Gemisches die Auftragung der mechanischen Schutzschicht unmittelbar anschließend an eine auf erwärmte Stahlrohre aufgebrachte passive Korrosionsschutzbeschichtung unter Ausnutzung der aus diesem Prozeß stammenden Restwärme des Stahlrohres aufzutragen. Das Temperaturniveau dieser Restwärme läßt sich durch entsprechende Regelung der Kühlstrecke im Korrosionsschutzbeschichtungsprozeß auf einen geeigneten Wert bringen. Die Trägerfolie, die im Prinzip eine beliebige Form haben kann, muß so groß sein, daß sie die gesamte Oberfläche der mechanischen Schutzschicht außen überdeckt. Vorteilhaft wird eine rechteckige Form gewählt, wobei die Längsseite des Rechteckes der Beschichtungslänge des Stahlrohres entspricht. Die beiden Längsseiten der Trägerfolie werden am Rand jeweils mit einem Klebestreifen versehen. Die Auftragung dieser Klebestreifen kann gleichzeitig mit dem Auftragen des aushärtbaren Gemisches erfolgen; es können aber auch Folien verwendet werden, die diese Klebestreifen bereits vorher aufweisen. Zur Minimierung des Aufwandes für die Trägerfolie ist es zweckmäßig, deren Größe so zu wählen, daß die Fläche zwischen den beiden Klebestreifen der Oberfläche des mit der mechanischen Schutzschicht versehenen Rohres entspricht. In Weiterbildung des Verfahrens wird vorgeschlagen, die Längsseiten der Trägerfolie in einem Winkel von bis zu 45° schräg zur Achse des Rohres auszurichten. Hierdurch wird es möglich, die gleiche Trägerfolie, die bei paralleler Ausrichtung ihrer Längsseiten zur Rohrachse für ein bestimmtes Rohr verwendbar ist, auch bei der Ummantelung von Stahlrohren, die einen bis zu 1,4fachen Rohrdurchmesser aufweisen, zu benutzen. In diesem Fall ist es zweckmäßig, die Schmalseiten der Folie so zuzuschneiden, daß sie senkrecht zur Rohrlängsachse, also in Abwälzrichtung des Stahlrohres liegen. Die Verwendung einer perforierten oder porösen Trägerfolie ist zweckmäßig, um beim Einsatz der geschützten Rohre zusammen mit kathodischem Schutz dem Schutzstrom freien Durchtritt zu etwaigen Verletzungen der eigentlichen Korrosionsschutzschicht zu gewähren. Neben der Verwendung von Glasvlies oder -gewebe bzw. von organischen Geweben, die im Erdreich beständig sind, kann aus wirtschaftlichen Gründen auch eine im Erdreich verrottende Trägerfolie, z.B. aus Kraftpapier, eingesetzt werden. Bei allen genannten Trägerfolien ist die Forderung der Durchlässigkeit für den Schutzstrom erfüllt.

Um die Zugfestigkeit der mechanischen Schutzschicht zu erhöhen und ihren Zusammenhalt auch im Falle eines Bruches der Schicht zu gewährleisten, werden dem aushärtbaren Gemisch vorteilhaft Verstärkungsfasern z.B. aus Polypropylen, Asbest oder Glas zugesetzt. Als härtbares Gemisch für die Schutzschicht lassen sich insbesondere die an sich bekannten Kunststoffzementmörtel verwenden. Dabei kann es vorteilhaft sein, dem Gemisch Zusatzstoffe wie Betonverflüssiger oder organische Dispersionen zuzusetzen. Vorteile bietet aber auch ein aushärtbares Gemisch aus Füllstoffen (z.B. Quarzkies), welche nur oberflächlich mit Bindemitteln wie Zement, Dispersionsklebern oder aushärtbaren Harzen benetzt sind. Hierbei ergibt sich auch im Falle elektrisch nicht leitender Harze eine poröse Struktur der Schutzschicht, die im feuchten Erdreich den Schutzstromzutritt nicht behindert. Um bei härtbaren Harzen als Bindemittel eine schnelle Aushärtung des Gemisches zu erreichen, ohne eine zu kurze Topfzeit in Kauf nehmen zu müssen, ist es vorteilhaft, als Bindemittel ein ungesättigtes nicht- oder nur niedrigkatalysiertes härtendes Harz, vorzugsweise ein ungesättigtes Polyesterharz, zu verwenden und die Oberfläche der Korrosionsschutzschicht vor dem Auftragen des Gemisches mit einer hochkatalysierten Trägerflüssigkeit zu benetzen. Bei dieser Vorgehensweise wird die beschleunigte Aushärtung des Gemisches erst durch das Zusammentreffen des Gemisches mit der hochkatalysierten Trägerflüssigkeit bewirkt.

Sofern dem aushärtbaren Gemisch Zement als Bindemittel zugesetzt wird, sind als Kleber vorzugsweise zementverträgliche Dispersionskleber zu verwenden. Unter Umständen kann es auch ausreichen, die Trägerfolie an ihren Rändern mit Wasser zu benetzen, um ein Anhaften der Trägerfolie auf der Korrosionsschutzschicht zu bewirken. Da die beiden Klebungen auf unterschiedlichem Untergrund mit eventuell unterschiedlicher Temperatur erfolgen, werden vorteilhaft unterschiedliche Klebstoffe verwendet. Insbesondere für das Ankleben der Trägerfolie an die Korrosionsschutzschicht zu Beginn des Abwälzvorganges sind Haftkleber vorteilhaft.

6

0138742

Sofern die Auftragung der mechanischen Schutzschicht unter Ausnutzung der Restwärme aus der vorhergehenden Korrosionsschutzbeschichtung erfolgt, sind für diese erste Klebstelle Schmelzkleber vorteilhaft. Diese können ohne Probleme bereits vor dem eigentlichen Beschichtungsvorgang auf den Rand der Trägerfolie aufgetragen werden. Im übrigen sind die zu verwendenden Kleber auf die Verarbeitungstemperatur der Rohre abzustimmen.

In vorteilhafter Weiterbildung des Verfahrens wird vorgeschlagen, das schichtdickenbestimmende Größtkorn bereits vor der Aufbringung des härtbaren Gemisches auf das Rohr aufzutragen, indem z.B. die Oberfläche der Korrosionsschutzschicht mit einem Kleber benetzt wird und das Rohr danach in dem Korngemisch gewälzt wird. Das zeitlich getrennte Aufbringen des Größtkornes hat den Vorteil, daß dann auch härtbare Gemische mit vergleichsweise niedriger Viskosität verwendbar sind.

Eine besonders günstige Übertragung der Auflagerkräfte des Stahlrohres auf die Korrosionsschutzschicht wird durch flächig ausgebildete Größtkörner ermöglicht. Von besonderem Vorteil ist dabei eine gewölbte Fläche des Größtkornes, die der Krümmung des Stahlrohres angepaßt ist. Da das Größtkorn ohnehin alleine die Übertragung des durch die Auflagerkräfte des Stahlrohres hervorgerufenen mechanischen Druckes auf die Korrosionsschutzschicht übernehmen muß, solange das aufgetragene Gemisch nicht ausgehärtet ist, und daher aus einem druckfesten Material, vorzugsweise druckfesten Kunststoff, bestehen muß, können für die übrigen Füllstoffe andere Materialien, insbesondere auch weichere Materialien (z.B. Styroporkugeln) verwendet werden.

Eine Vorrichtung zur Durchführung des Verfahrens wird vorteilhaft hinter der Kühlstrecke einer Anlage zur Aufbringung der Korrosionsschutzschicht, und zwar unmittelbar im Anschluß an das Hochlager angeordnet, auf dem die abgekühlten Rohre abgelegt werden.

Kennzeichnend für die Vorrichtung ist ein brettartiger Träger, der im wesentlichen horizontal ausgerichtet ist, mindestens die Länge der zu beschichtenden Stahlrohre hat und eine ausreichende Breite für das Abwälzen des Stahlrohres zur Verteilung des härtbaren Gemisches über die gesamte Rohroberfläche aufweist. Zur Erleichterung des Anklebens der Klebestreifen beim Abwälzen des Stahlrohres über die ausgebreitete Trägerfolie ist es vorteilhaft, im Randbereich der Längsseiten des brettartigen Trägers wulstartige Erhöhungen aus einem weich-elastischen Material vorzusehen.

Zur Aufbereitung und Auftragung des aushärtbaren Gemisches sind an sich bekannte Misch-, Förder- und Austrageeinrichtungen vorgesehen, wobei die Zuführung der Austrageeinrichtung über dem brettartigen Träger endet. Die für das Ankleben der Trägerfolie benötigten Klebestreifen können bereits von vornherein auf der Trägerfolie vorgesehen sein. Sie können aber auch im Zuge des Beschichtungsverfahrens, d.h. zum Beispiel zeitlich parallel zur Auftragung des aushärtbaren Gemisches auf die Trägerfolie aus einer entsprechenden Kleberauftrageeinheit aufgebracht werden. In vorteilhafter Weiterbildung der Erfindung wird der brettartige Träger in der Weise in Einzelelemente aufgeteilt, daß eine umlaufende Gliederkette entsteht, die vertikal, d.h. durch Umlenkrollen mit horizontaler Drehachse, umgelenkt wird. Hierdurch wird es ermöglicht, die Trägerfolie, die von einer Rolle, die an der Schmalseite der Gliederbandkette angeordnet ist, abgewickelt und in geeigneter Länge abgeschnitten wird, vor das Hochlager zu ziehen und während dieses Transportes durch z.B. ortsfeste, neben der Gliederbandkette und außerhalb des Transportraumes der Rohre angeordnete Einrichtungen mit dem aushärtbaren Gemisch bzw. den Klebestreifen entlang der Länge der Trägerfolie zu belegen.

Anstelle einer Gliederbandkette läßt sich als brettartiger Träger auch vorteilhaft ein umlaufendes Band, z.B. aus Stahl, verwenden, dessen Arbeitsbereich, d.h. dessen oben liegender Teil, von unten flächig abgestützt ist. In dieser Ausführung läßt sich die erfindungsgemäße Vorrichtung in der Weise vorteilhaft weiterbilden, daß das umlaufende Band in einer horizontalen Ebene um bis zu 45° gegenüber der Förderrichtung des Hochlagers schwenkbar ausgeführt wird.

Das umlaufende Band kann dann über eine in Transportrichtung der Stahlrohre geschlossene flächige Abstützung hinweg geschwenkt werden, ohne dabei hinter dem Hochlager im Transportweg eine Lücke entstehen zu lassen, in die die Rohre bei ihrem Weitertransport hinein- fallen könnten. Das schwenkbare umlaufende Band ermöglicht es, die Stahlrohre ohne Änderung ihrer Transportrichtung über eine schräg zur Rohrachse ausgerichtete Trägerfolie abzuwälzen und spiralförmig zu umwickeln, wodurch auch Stahlrohre vollständig mit der Trägerfolie umhüllbar sind, deren Umfang inklusive Beschichtung größer ist als die Folienbreite. Der Schwenkbereich bis zu 45° ermöglicht die Umhüllung von Stahlrohren mit einem um bis zu etwa 40 % größeren Durchmesser als bei paralleler Ausrichtung der Folienlängsseiten zur Rohrachse. Die Erfindung wird im folgenden anhand von schematischen Zeichnungen näher erläutert. Es zeigen:

Fig. 1    drei Phasen des Verfahrensablaufs,

Fig. 2    eine Draufsicht auf eine Rohrbeschichtungsanlage,

Fig. 3    eine Seitenansicht der Beschichtungsanlage.

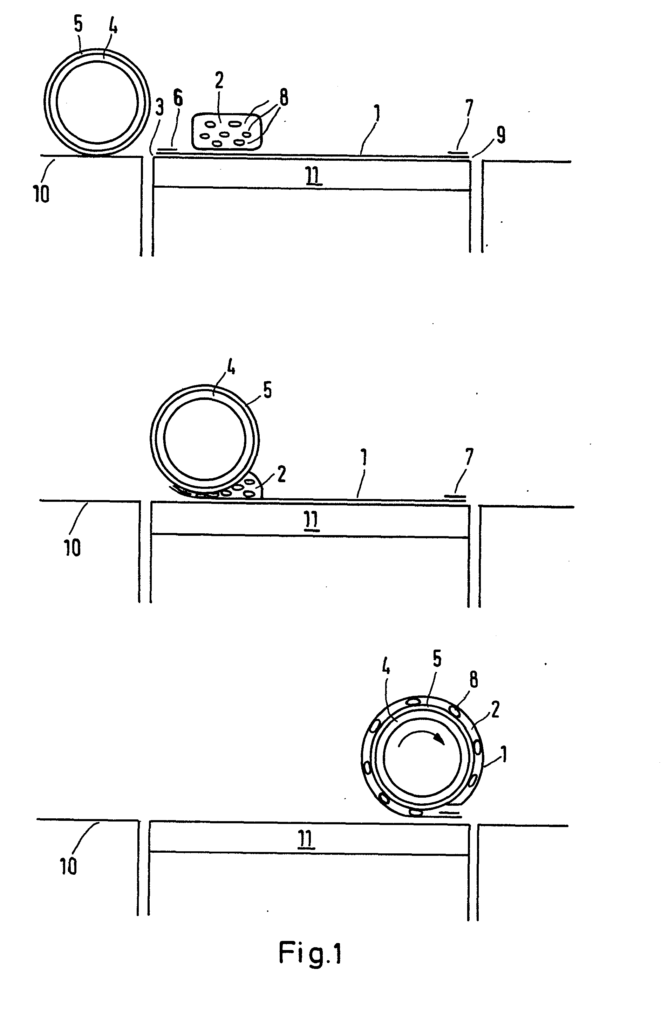

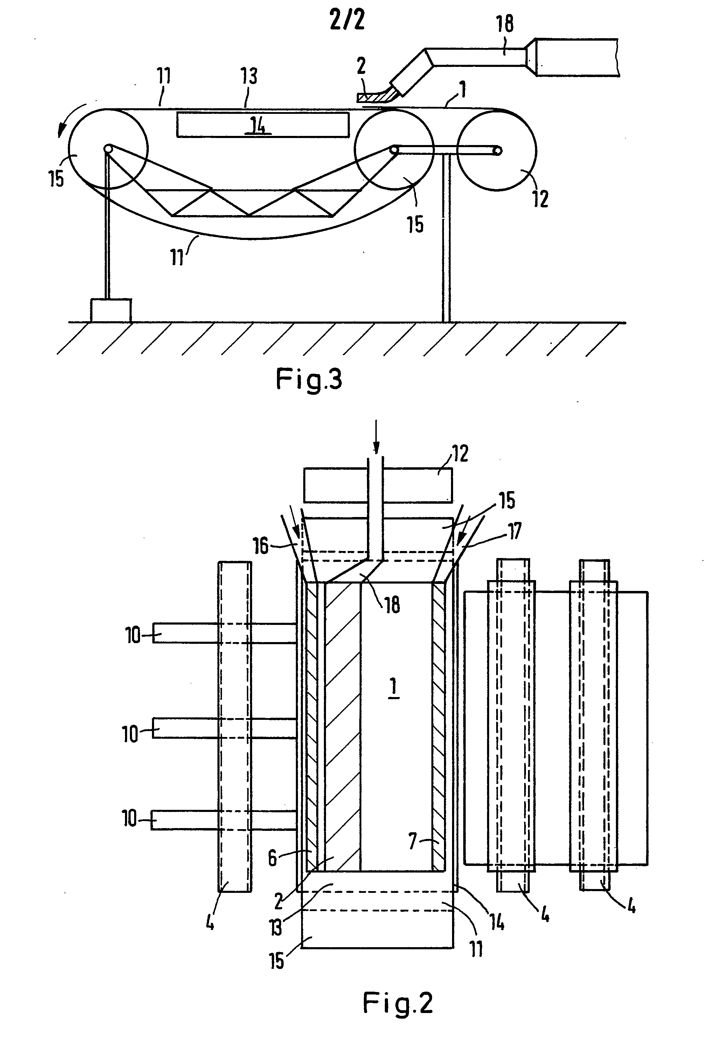

Ein Stahlrohr von ca. 12 m Länge und einem Durchmesser von 200 mm wird in einer üblichen Anlage nahtlos mit einer 3 mm dicken Polyäthylenschicht ummantelt. Die Rohrtemperatur beträgt dabei 200 °C und wird in der nachfolgend durchlaufenen Kühlstrecke auf 80 °C abgesenkt. Die Temperatur der Oberfläche der Korrosionsschutzumhüllung beträgt dabei zunächst etwa 30 °C und steigt danach durch Wärmeleitung vom Stahlrohr bis auf ca. 70 °C an. Wie aus Fig. 1 bzw. 2 ersichtlich ist, wird dieses Stahlrohr 4 auf einem Hochlager 10, das der nicht dargestellten Kühlstrecke nachgelagert ist, abgelegt bzw. abgerollt. An das Hochlager 10 schließt sich eine 2 m breite vollflächig ebene Zone 14 an, über der ein schleifenförmiges Stahlband 11 von 1 m Breite, das mit seinem oberen Teil 13, dem Arbeitsteil, berührend auf der Abstützung 14 mit ebener Oberfläche aufliegt, bewegbar angeordnet ist.

Dieses Stahlband 11 wird von zwei antreibbaren Umlenkrollen 15 mit horizontaler Drehachse umgelenkt. Hinter einer Umlenkrolle 15 befindet sich eine Vorratsrolle 12 mit der aufgewickelten Trägerfolie 1, deren Breite den Außenumfang der aufzutragenden mechanischen Schutzschicht (Außendurchmesser ca. 232 mm) um etwa 50 mm überschreitet, d.h. etwa 730 mm beträgt. Der Anfang der Trägerfolie 1 wird auf dem Stahlband 11 lösbar befestigt, z.B. durch einen Haftmagneten. Danach werden aus drei hinter der Vorratsrolle 12 angeordneten Austrageeinrichtungen, von denen in Fig. 2 nur die Zuführungen 16, 17, 18 zur Trägerfolie 1 dargestellt sind, die beiden Klebestreifen 6, 7 und das härtbare Gemisch 2 als Band bzw. Strang auf die Trägerfolie 1 in der gewünschten Beschichtungslänge aufgebracht, die dabei durch den Antrieb der Umlenkrollen 15 bewegt wird. Nach dem Abschneiden der beschichteten Trägerfolie 1 wird das so vorbereitete Folienstück in eine Position vor das Stahlrohr 4 gefahren, bei der die Längsseite 3 parallel zur Längsachse des Stahlrohres 4 liegt. Das Stahlrohr 4 wird dann über die Längsseite 3 der Trägerfolie 1 abgerollt. Dabei wird der Klebestreifen 6 erfaßt und die Trägerfolie 1 an die Polyäthylenschicht 5 angeklebt. Im weiteren Abrollvorgang verteilt sich das aushärtbare Gemisch 2 nach Maßgabe des hier 5 mm hohen Größtkornes 8. Die ebenfalls mit Kleber versehene Längsseite 9 der Trägerfolie 1 klebt schließlich mit ihrem Klebestreifen 7 an die Rückseite der Trägerfolie 1 an und hält die aufgetragene Schutzschicht zusammen. Das so beschichtete Stahlrohr 4 kann auch vor Aushärtung der Schutzschicht auf ebenen Flächen gelagert werden.

Für den Klebestreifen 6 wurde ein auf Vinylazetatbasis compoundierter Schmelzkleber, für den Klebestreifen 7 ein Dispersionskleber auf Basis Polyacrylester verwendet. Das aushärtbare Gemisch 2 enthält 15 % 5 mm Quarzkies als Größtkorn 8, 5 % Glasfasern von 25 - 30 mm Länge und 40% Sand. Der Rest des Gemisches 2 besteht aus einem Gemisch von Tonerdeschmelz- und Portlandzement sowie handelsüblichen Verflüssigern (Alkalialuminat) und Zusätzen einer Dispersion auf Basis Acrylsäureester.

Fig. 3 zeigt in Seitenansicht, wie das umlaufende Stahlband 11 in seinem oberen Teil, dem Arbeitsbereich 13, von unten durch die Abstützung 14 flächig gestützt wird.

MANNESMANN AKTIENGESELLSCHAFT
Mannesmannufer 2

4000 Düsseldorf 1

Verfahren und Vorrichtung zum Erzeugen einer
mechanischen Schutzschicht für Stahlrohre

Patentansprüche

1. Verfahren zum Erzeugen einer mechanischen Schutzschicht auf der Oberfläche eines mit einer passiven Korrosionsschutzschicht, z.B. mit einer thermoplastischen Kunststoffmantelschicht, versehenen Stahlrohres durch Umhüllen des Rohres mit einem das härtbare Material für die mechanische Schutzschicht aufnehmen-den, flächig ausgebildeten Trägermittel, d a d u r c h   g e k e n n z e i c h n e t, daß eine im wesentlichen eben ausgebreitete Trägerfolie (1), deren Länge der axialen zu beschichtenden Rohrlänge und dessen Breite mindestens dem Umfang des Rohres entspricht mit einem aushärtbaren Gemisch (2) aus Füllstoffen und Bindemitteln belegt und danach der Rand einer Längsseite (3) der Folie über die Beschichtungslänge des Stahlrohres (4) an die Korrosionsschutzschicht (5) des Stahlrohres (4) angeklebt wird, daß das Stahlrohr (4) anschließend auf der Trägerfolie (1) abgewälzt wird, daß vor oder während des Abwälzens des Stahlrohres (4) in das Gemisch (2) zwecks Erzielung einer gleichmäßigen Schichtdicke ein körniges Material, dessen Größtkorn (8) der gewünschten Schichtdicke entspricht und einen Volumenanteil von mindestens 10 % des Gemisches (2) ausmacht, eingebracht wird und daß die zweite Längsseite (9) der Trägerfolie (1) an die Rückseite der das Stahlrohr (4) einhüllenden Trägerfolie (1) geklebt wird.

2. Verfahren nach Anspruch 1,
d a d u r c h   g e k e n n z e i c h n e t ,
daß das härtbare Gemisch (2) im wesentlichen als Strang in der Nähe des Randes entlang der Längsseite (3) der Trägerfolie (1) abgelegt wird, die an die Korrosionsschutzschicht (5) des Stahlrohres (4) angeklebt wird.

3. Verfahren nach Anspruch 1 oder 2,
d a d u r c h   g e k e n n z e i c h n e t ,
daß das Abrollen des Stahlrohres (4) unter Verstärkung des ansonsten durch das Eigengewicht des Stahlrohres (4) bewirkten mechanischen Druckes auf das Gemisch (2) erfolgt.

4. Verfahren nach einem der Ansprüche 1 bis 3,
d a d u r c h   g e k e n n z e i c h n e t ,
daß das Gemisch (2) zum Zwecke einer schnelleren Aushärtung auf das aus der vorhergehenden Auftragung der passiven Korrosionsschutzschicht (5) noch warme Stahlrohr (4) aufgetragen wird.

5. Verfahren nach einem der Ansprüche 1 - 4,
d a d u r c h   g e k e n n z e i c h n e t ,
daß eine Trägerfolie (1) mit parallelogrammförmiger, vorzugsweise rechteckiger, Außenkontur verwendet wird.

6. Verfahren nach einem der Ansprüche 1 - 5,
d a d u r c h   g e k e n n z e i c h n e t ,
daß die Trägerfolie (1) zeitlich parallel zu dem Belegen mit dem Gemisch (2) an den Rändern ihrer Längsseiten (3, 9) jeweils mit einem Klebestreifen (6, 7) versehen wird.

0138742

7. Verfahren nach Anspruch 6,
   d a d u r c h   g e k e n n z e i c h n e t,
   daß eine Trägerfolie (1) verwendet wird, deren zwischen den Klebestreifen (6, 7) liegende Fläche der Oberfläche des mit der mechanischen Schutzschicht versehenen Stahlrohres (4) entspricht.

8. Verfahren nach einem der Ansprüche 5 - 7,
   d a d u r c h   g e k e n n z e i c h n e t,
   daß die Längsachse des Stahlrohres (4) und die Längsseiten (3, 9) der
   Trägerfolie (1) für das Abwälzen mit einem Winkel von bis zu 45°
   schräg zueinander gestellt werden.

9. Verfahren nach Anspruch 8,
   d a d u r c h   g e k e n n z e i c h n e t,
   daß die Schmalseiten der Trägerfolie (1) so zugeschnitten werden, daß
   sie beim Abwälzen des Stahlrohres (4) senkrecht zur Längsachse des
   Stahlrohres (4) liegen.

10. Verfahren nach einem der Ansprüche 1 - 9,
    d a d u r c h   g e k e n n z e i c h n e t,
    daß eine perforierte oder poröse Trägerfolie (1) verwendet wird.

11. Verfahren nach einem der Ansprüche 1 - 10,
    d a d u r c h   g e k e n n z e i c h n e t,
    daß eine aus Glasfasern bestehende Trägerfolie (1) verwendet wird.

12. Verfahren nach einem der Ansprüche 1 - 10,
    d a d u r c h   g e k e n n z e i c h n e t,
    daß eine Trägerfolie (1) aus organischem synthetischem Gewebe verwendet wird.

13. Verfahren nach einem der Ansprüche 1 - 10,
    d a d u r c h   g e k e n n z e i c h n e t,
    daß eine Trägerfolie (1) aus im Erdreich verrottbarem Material (z.B.
    Papier) verwendet wird.

14. Verfahren nach einem der Ansprüche 1 - 13,  0138742
    d a d u r c h   g e k e n n z e i c h n e t ,
    daß ein härtbares Gemisch (2) verwendet wird, welches Verstärkungsfasern vorzugsweise aus Polypropylen, Asbest oder Glas enthält.

15. Verfahren nach einem der Ansprüche 1 - 14,
    d a d u r c h   g e k e n n z e i c h n e t ,
    daß als härtbares Gemisch (2) Kunststoff-Zementmörtel verwendet wird.

16. Verfahren nach Anspruch 15,
    d a d u r c h   g e k e n n z e i c h n e t ,
    daß ein härtbares Gemisch (2) verwendet wird, das Zusatzstoffe wie
    Betonverflüssiger oder organische Dispersionen enthält.

17. Verfahren nach einem der Ansprüche 1 - 16,
    d a d u r c h   g e k e n n z e i c h n e t ,
    daß die Füllstoffe des härtbaren Gemisches (2) nur oberflächlich mit
    Bindemittel benetzt werden.

18. Verfahren nach einem der Ansprüche 1 - 14,
    d a d u r c h   g e k e n n z e i c h n e t ,
    daß als Bindemittel ein ungesättigtes nicht- oder nur niedrigkatalysiertes härtendes Harz, vorzugsweise ein ungesättigter Polyester,
    verwendet wird und die Oberfläche der passiven Korrosionsschutzschicht
    (5) vor dem Abwälzen des Rohres (4) mit einer hochkatalysierten
    Trägerflüssigkeit benetzt wird.

19. Verfahren nach einem der Ansprüche 1 - 18,
    d a d u r c h   g e k e n n z e i c h n e t ,
    daß unterschiedliche Kleber für die beiden Klebestreifen (6, 7) verwendet werden, die Trägerfolie (1) jedoch mit einem Schmelzkleber an
    die noch warme Korrosionsschutzschicht (5) des Stahlrohres (4) ange-
    klebt wird.

- 5 -

20. Verfahren nach einem der Ansprüche 1 - 19,
    d a d u r c h   g e k e n n z e i c h n e t,
    daß das schichtdickenbestimmende Größtkorn (8) vor der Aufbringung des
    härtbaren Gemisches (2) auf das Stahlrohr (4) aufgebracht wird.

21. Verfahren nach Anspruch 20,
    d a d u r c h   g e k e n n z e i c h n e t,
    daß als schichtdickenbestimmendes Größtkorn (8) flächig ausgebildete
    Teilchen verwendet werden, die vorzugsweise eine gewölbte Fläche aufweisen, deren Krümmung der Oberfläche des korrosionsschutzbeschichteten Stahlrohres (4) angepaßt ist.

22. Verfahren nach Anspruch 21,
    d a d u r c h   g e k e n n z e i c h n e t,
    daß als Größtkorn (8) ein druckfester Kunststoff verwendet wird.

23. Vorrichtung zur Durchführung des Verfahrens nach Anspruch 1, bestehend
    aus einer Anlage zur Aufbringung einer Korrosionsschutzbeschichtung
    auf Stahlrohre mit einem anschließenden Hochlager zur Ablage der be-
    schichteten Stahlrohre,
    d a d u r c h   g e k e n n z e i c h n e t,
    daß unmittelbar anschließend an das Hochlager (10) ein im wesentlichen
    horizontal ausgerichteter brettartiger Träger (11) angeordnet ist,
    dessen Länge und Breite größer als die Länge bzw. der Umfang der für
    die Beschichtung vorgesehenen Stahlrohre (4) ist, und daß an sich
    bekannte Misch-,Förder- und Austrageeinrichtungen für die Aufbereitung
    und Auftragung des aushärtbaren Gemisches (2) so angeordnet sind, daß
    die Zuführung (18) der Austrageeinrichtung über dem brettartigen
    Träger (11) endet.

24. Vorrichtung nach Anspruch 23,
    d a d u r c h   g e k e n n z e i c h n e t,
    daß zum Zwecke des Anpressens der Klebestreifen (6, 7) an das Stahlrohr (4) im Randbereich der Längsseiten des brettartigen Trägers (11)
    wulstartige Erhöhungen aus einem weich-elastischen Material angeordnet
    sind.

0138742

25. Vorrichtung nach Anspruch 23 oder 24,
d a d u r c h   g e k e n n z e i c h n e t ,
daß der brettartige Träger (11) in Einzelelemente aufgeteilt ist, die
eine umlaufende, vertikal umgelenkte Gliederbandkette bilden.

26. Vorrichtung nach Anspruch 23 oder 24,
d a d u r c h   g e k e n n.z e i c h n e t ,
daß der brettartige Träger (11) als umlaufendes, vertikal umgelenktes
Band, z.B. Stahlband, ausgebildet ist, das im Arbeitsbereich von unten
flächig abgestützt ist.

27. Vorrichtung nach Anspruch 26,
d a d u r c h   g e k e n n z e i c h n e t ,
daß der brettartige Träger (11) in einer horizontalen Ebene um bis zu
45° gegenüber der Förderrichtung des Hochlagers (10) schwenkbar ausgeführt ist.

Fig.1

0138742

2/2

Fig.3

Fig.2